# EUROPEAN PATENT SPECIFICATION

(11) **EP 2 741 561 B1**
(45) Date of publication and mention of the grant of the patent: **03.05.2017**
(21) Application number: 12306528.6
(22) Date of filing: 06.12.2012
(51) Int. Cl.: H04W 76/02, H04W 72/04

(54) **Access network element, system and terminal for a cellular wireless access network and methods for operating the same**
Zugriffsnetzwerkelement, System und Endgerät für ein zellulares drahtloses Zugriffsnetzwerk und Verfahren zum Betrieb davon
Élément de réseau d'accès, système et terminal pour un réseau d'accès sans fil cellulaire et procédés de fonctionnement de celui-ci

(43) Date of publication of application: 11.06.2014
(73) Proprietor: ALCATEL LUCENT, 92100 Boulogne-Billancourt (FR)
(72) Inventor: Wild, Thorsten, 70435 Stuttgart (DE); Fonseca dos Santos, André, 70197 Stuttgart (DE); Schaich, Frank, 70469 Stuttgart (DE); Doetsch, Uwe, 74392 Freudental (DE)
(74) Representative: Lück, Stephan

(56) References cited:
- EP-A1- 2 869 664
- WO-A1-2012/118448
- WO-A2-2011/145857
- US-A1- 2011 159 799

## Description

### Field of the invention

The present invention refers to an access network element for a cellular wireless access network, a terminal for a cellular wireless access network and methods for operating said access element and said terminal.

### Background

In known cellular radio access networks such as the Long Term Evolution (LTE) access network or the UMTS Radio Access Network (UTRAN), terminals registered with the same radio cell communicate with each other over a base station.

In order to allow for a more efficient communication between terminals that are located close to each other, device to device communication may be performed with the terminals exchanging data directly with each other without using a base station for relaying the data. Device to device communication may be network assisted, i.e. a cellular access network may coordinate the direct data communications between the individual terminals.

When a terminal wants to transmit data to multiple further terminals, often a situation arises where some further terminals are located next to the terminal and some further terminals are located far away so that device to device communication is not feasible with all further terminals In known communication systems, either classical indirect cellular communication must be performed for all further terminals or a cellular communication and device to device communication must be performed simultaneously. Both known approaches are rather resource consuming.

In WO 2011/145857 A1, a method for directly transmitting and receiving data between terminals in a frequency division duplexing type mobile communication system is disclosed.

In EP 2869664 A1, mobile communication system is described, which directly performs user-data communication between a number of radio terminals without involvement of a radio base station. The user-data communication is performed by using a part of radio resources assigned to the mobile communication system. The radio base station has a base station-side control unit that assigns the radio resources assigned to the user-data communication directly performed between the radio terminals, as a reception resource for receiving the user data.

Further, US 2011/159799, describes a method for a multicast transmission from a source device to a base station in a wireless communication system. The multicast transmission is targeting multiple devices including a local receiving device. The source device and the local receiving device belong to a cluster that is at least partially located in a cell which is serviced by the base station. In case the local receiving device did not correctly receive the multicast transmission, a retransmission of the multicast transmission from the source device directly to the local receiving device is performed.

### Summary

Thus, the object of the present invention is to provide a network element and a terminal and methods for operating the same that allow for using radio transmission resources efficiently in cases where data must be communicated both by device-to-device communication as well as by conventional cellular communication. The invention is defined by an access network element according to claim 1, a method therefore according to claim 8, a system according to claim 9, a radio terminal according to claim 9 and a method therefore.

According to an embodiment of the present invention, an access network element for a cellular wireless access network is provided, the access network comprising uplink radio transmission resources that are different to downlink radio transmission resources of the access network, the network element being operable for instructing a first radio terminal to transmit data over a portion of the uplink transmission resources to the access network; and receiving the data from the first terminal over the portion of the uplink transmission resources; wherein the network element is further operable for instructing at least one further radio terminal to receive the data transmitted by the first terminal over the portion of the uplink transmission resources directly via the uplink transmission resources. By both receiving the data via the uplink as well as instructing the further terminal to directly receive the data from the uplink, conventional cellular communication and device to device communication are combined, with cellular communication and device communication using the same radio resources. Using the same radio resources for cellular communication and device to device communication, the overall radio resource consumption is reduced compared with known communication schemes so that the access network can be operated more efficiently. The present invention is not limited to any type of access network element. In one embodiment, the access network element is a base station, e.g. an UMTS nodeB or an LTE eNodeB. In another embodiment, the network element is a base station controller such as an UMTS RNC. In yet another embodiment the network element is a node of a distributed base station such as a baseband processing node or a remote radio head.

In an embodiment, the network element is operable for performing at least one acknowledgement process with the at least one further radio terminal, the acknowledgement process being related the data transmitted directly from the first radio terminal to the further radio terminal. For instance, the data may include at least one Protocol Data Unit (PDU) and/or the acknowledgment process may be a Hybrid Automatic Repeat Request (HARQ). Preferably, the acknowledgement process may be performed for at least one PDU.

In a particular embodiment, performing the acknowledgement process comprises retransmitting the data directly to the further terminal upon reception of a negative acknowledgement from the further terminal. Preferably, this retransmitting may be performed by the network element using the downlink radio transmission resources. Should the direct transmission from the first terminal not succeed, the retransmission by the base station will most probably reach the further terminal.

In an embodiment, performing the acknowledgement process comprises triggering a retransmission of the data to be performed by the at least one terminal. Said at least one terminal may include a terminal that has the data available, e.g. the first terminal and/or a further terminal that has already successfully received the data unit. According to this embodiment, the retransmission is performed by a terminal, preferably using uplink transmission resources (e.g. the uplink transmission resources used for the initial transmission). In an embodiment, the retransmission is performed by at least one terminal only. In another embodiment, the retransmission is performed by the network element using the downlink radio transmission resources and by at least one terminal.

In an embodiment, the network element is operable for deciding on whether to retransmit the data unit or to trigger a retransmission of the data unit based on network information about the state of the network or about the cell topology of the network. Thus, the network element can adapt the type of retransmission to the current state of the access network. For example, the network information may include a resource usage of the uplink radio resources and/or the downlink radio resources, a cell size, a location of the terminals and/or an interference situation on the uplink and/or downlink radio resources.

In an embodiment, performing the acknowledgement process comprises encoding the data unit to be retransmitted by means of a rateless code, preferably a Fountain Code. Using rateless code further improves the efficiency of the network.

In an embodiment, the network element is operable for determining a set including the further terminals to which the data is addressed and for determining a sub-set of said set including those further terminals that possibly can receive the data directly from the first terminal via the uplink transmission resources, wherein the network element is further operable for instructing only the further terminals contained in the addressee set to receive the data over the uplink transmission resources directly from the first terminal.

In an embodiment, the network element is operable for determining a location of at least one further terminal, preferably by querying a location database. The location database may be part of the network element, the access network or the mobile communication system.

In an embodiment, the network element is operable for including those further terminals in the set that are located in the same cell as the first terminal.

In an embodiment, the network element is operable for including further terminals into the set that are located in a neighbouring cell with respect to the cell with which the first terminal is registered. For this purpose, network elements may share information (e.g. via the backhaul network) on terminals which are candidates for device-to-device transmission and may therefore included in the sub-set.

According to a further embodiment, a method for operating a network element for a cellular wireless access network is provided, the access network comprising uplink transmission resources that are different to downlink transmission resources of the access network, the method comprising instructing a first radio terminal to transmit data over a portion of the uplink transmission resources to the access network; and receiving the data from the first terminal over the portion of the uplink transmission resources; wherein the network element is further operable for instructing at least one further radio terminal to receive the data transmitted by the first terminal over the portion of the uplink transmission resources directly via the uplink transmission resources

In addition a computer program product, preferably a computer readable storage medium is provided, which computer program product comprises a computer program that is programmed for executing a method for operating a network element according to the invention when run on a computer. Embodiments of the method for operating the network element are described herein. The storage element may include optical storage, magnetic storage or semiconductor storage. The computer program may be provided for download over a communication network.

According to still another embodiment, a radio access network comprising a network element according to the invention is provided, embodiments of which network element are described herein.

According to a further embodiment of the invention, a radio terminal for a cellular wireless access network is provided, the access network comprising uplink transmission resources that are different to downlink transmission resources of the access network, the radio terminal being operable for receiving an instruction to receive data transmitted by another terminal over a portion of the uplink transmission resources; and receiving the data over said portion of the uplink transmission resources directly from the other terminal.

In an embodiment, the radio terminal comprises multiple antennas and is operable for cancel interference in the portion of uplink transmission resources.

According to another embodiment, a method for operating a radio terminal is provided, the access network comprising uplink transmission resources that are different to downlink transmission resources of the access network, the radio terminal being operable for receiving an instruction to receive data transmitted by another terminal over a portion of the uplink transmission resources; and receiving the data over said portion of the uplink transmission resources directly from the other terminal.

In addition a computer program product, preferably a computer readable storage medium is provided, which computer program product comprises a computer program that is programmed for executing a method for operating a radio terminal according to the invention when run on a computer. Embodiments of the method for operating a radio terminal are described herein. The storage element may include optical storage, magnetic storage or semiconductor storage. The computer program may be provided for download over a communication network.

### Brief description of the figures

Exemplary embodiments and further advantages of the present invention are shown in the Figures and described in detail hereinafter.
- Figure 1: shows a cellular wireless communication system and wireless terminals using this system;
- Figure 2: shows an exemplary scenario of device-to-device communication within the system shown in Figure 1;
- Figure 3: shows a message sequence chart of another scenario of device-to-device communication in the network shown in Figure 1; and
- Figure 4: shows a further exemplary scenario of device-to-device communication where wireless terminals associated with different radio cells are involved.

### Description of the embodiments

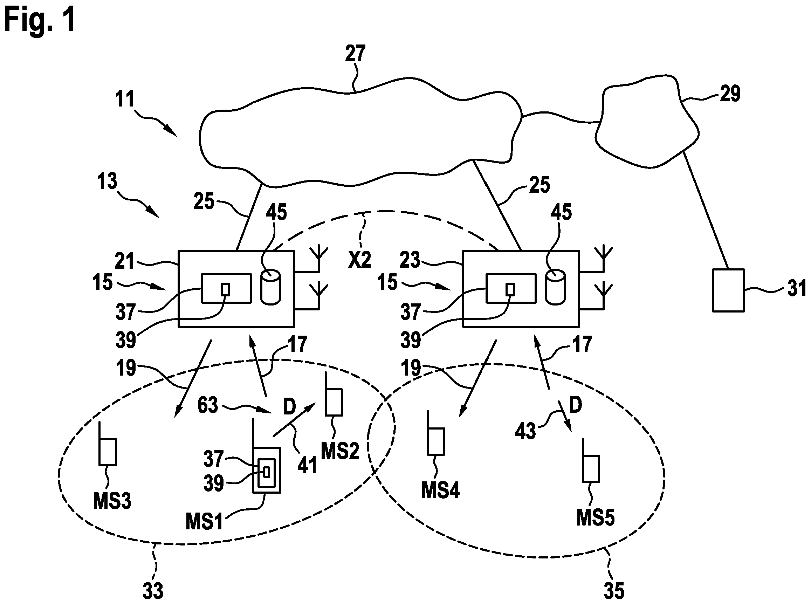

Figure 1 shows a mobile communication system 11 comprising a cellular wireless access network 13 and multiple network elements 15 that are capable of performing radio communication with radio terminals MS1, MS2, MS3, MS4, MS5 over uplink radio transmission resources 17 and downlink radio transmission resources 19. In the shown embodiment, the network elements 15 are base stations, e.g. a first base station 21 and a second base station 23. The base stations 21, 23 are connected via backhaul links 25 to a core network 27 of the communication system 11. The communication system 11 may be connected to a wide-area network such as the Internet 29. In particular, a gateway (not shown) of the core network 27 may provide access to the wide area network 29 to the mobile stations MS1, MS2, MS3, MS4 and/or other nodes of the communication system 11. Thus, the radio terminals MS1, MS2, MS3, MS4 may communicate with a node 31 connected to the wide area network, e.g. the Internet 29.

Although the present invention is not limited to a particular type of cellular communication system, the embodiment described herein refers to the Long Term Evolution (LTE) system specified by the Third Generation Partnership project (3GPP). According to 3GPP terminology, the base stations 21, 23 are also referred to as eNodeB and the terminals Ms1, MS2, MS3, MS4 may also refer to as User Equipment (UE). In LTE, the core network 27 is also referred to as evolved packet core (EPC).

A coverage area of the access network 13 is sub-divided in multiple radio cells (e.g. a first radio cell 33 and a second radio cell 35), with each radio cell 33, 35 being associated with one base station 21, 23. For the sake of simplicity, in the shown embodiment, each base station 21, 23 has exactly one radio cell 33, 35. The first radio cell 33 belongs to the first base station 21 and the second radio cell 35 belongs to the second base station 23. However, in other embodiments, a single base station may have multiple radio cells. The core network 27 is arranged such that the base stations 21, 23 can communicate with each other e.g. in order to coordinate handovers of terminals between the radio cells 33 and 35 and to interchange information needed for controlling device-to-device communication between individual terminals MS1, MS2, MS3, MS4, MS5. In the shown embodiment related to LTE, the communication between the base stations 21, 23 is carried out according to the X2 interface specified by the 3GPP. For communication with nodes of the core network 27, such as a mobility management entity or gateways (not shown), the base stations 21, 23 may use the S1 interface specified by the 3GPP.

The base stations 21, 23 may include a processor 37 arranged for executing a method for operating the base stations 21, 23. For example, the processor 37 may comprise a programmable computer having a storage element 39. A computer program may be stored on this storage element 39, which computer program may be programmed for executing the method for operating the base stations 21, 23.

Similarly, the radio terminals MS1, MS2, MS3, MS4, MS5 may comprise a further processor 37 arranged for executing a method for operating the respective terminals MS1, MS2, MS3, MS4, MS5. The further processor 37 may comprise a programmable computer including a further storage element 39. A further computer program may be stored on a further storage element 39, which computer program is programmed for executing a method for operating the respective terminal MS1, MS2, MS3, MS4, MS5. In Figure 1, the further processor 37 and the further storage element 39 are labelled with the same reference signs as the processor 39 and storage element 39 of the base stations 21,23.

The shown communication system 11 is arranged such that at least some terminals MS1, MS2, MS3, MS4, MS5 may communicate directly with each other without forwarding data D to be communicated to one of the base stations 21, 23. Such a Device-to-Device (D2D) communication (arrow 41) allows for an efficient exchange of the data D between terminals, e.g. between the two mobile terminals MS1, MS2 that are located comparatively close to each other such that they do not need the fixed infrastructure of the access network 13 for the data transmission. For example, if the terminal MS1 wants to transmit the data D e.g. to a terminal MS5 that is located rather far away from terminal MS1, the terminal MS1 must rely on the infrastructure of the communication system 11 in order to transmit the data D to that terminal MS5. In the shown embodiment, the terminal MS1 transmits the data D over the first base station 21, the core network 27 and the second base station 23 to the terminal MS5. The terminal MS5 uses conventional cellular communication (arrow 43) for receiving the data D. Accordingly, the terminals MS1, MS2, MS3, MS4, MS5 may transmit data D to the node 31 connected to the internet 29 using conventional cellular communication over the base stations 21, 23 and the core network 27 of the communication system 11.

Cellular communication 43 means communication where the payload data D is transmitted over at least one network element 15 of the access network 13, in particular over one of the base stations 21, 23. Device-to-device communication 41 is a communication scheme where a terminal MS1 transmits the data D directly to another terminal MS2 over a radio link between these two terminals MS1, MS2. That is, device to device communication 41, does not include passing the data D through a network element 15 of the access network 13, in particular one of the base stations 21, 23. In the shown embodiment, network-assisted device-to-device communication is performed, i.e. the access network 13, e.g. at least one base station 21, 23, coordinates the device-to-device communication without relaying the payload data D.

In some use cases of the communication system 11, a terminal - e.g. terminal MS1 - wants to perform am multicast communication sharing the data D with multiple further terminals (further referred to as "addressees") - e.g. with terminals MS2 and MS5 and with node 31. In such a use case, some of the terminals MS2 to which the first terminal MS 1 wants to transmit data D can be reached directly by device-to-device communication 41 because they are located close to the first terminal MS1, whereas other terminals MS5, 31 may be distant to the first terminal MS1 so that the fixed infrastructure 27, 13 of the communication system 11 is needed to communicate with these terminals MS5. That is, a situation may arise where a combination of device-to-device communication 41 and cellular communication 43 can be applied.

According to the embodiment described herein, efficient use of the radio resources 17, 19 in a combination of device-to-device communication 41 and cellular communication 43 is achieved by using the uplink resources 17 needed for the cellular communication 43 (e.g. for the transmission from MS1 to MS5) also for device-to-device communication 41 (e.g. from MS1 to MS2). To this end, the base station 21 may instruct the addressees that are possibly reachable directly by the first radio terminal MS 1 to directly listen to the data D transmitted by the first terminal MS 1 in the uplink 17. Consequently, a portion of the uplink radio resources 17 can be used for both device-to-device communication 41 to MS2 and conventional cellular communication 43 with the terminal MS5.

The base stations 21, 23 may have a database 45 arranged for maintaining information about the location of the individual addressees. The base stations 21, 23 may access this database 45 in order to determine the location of at least one addressee. The location information stored in the database 45 may comprise a geographic location of the addressee or a location within the topology of the access network 13, in particular information describing the radio cells 33, 35 where the individual addressees are located. For instance, the database 45 may store cell identifiers identifying the cells 33, 35 with which the individual addressees are currently registered. In an embodiment, the database 45 may contain location relationship information describing a location relationship of individual terminals to each other. The location relationship information may include at least one received radio signal power value describing a path loss and shadow fading relationships.

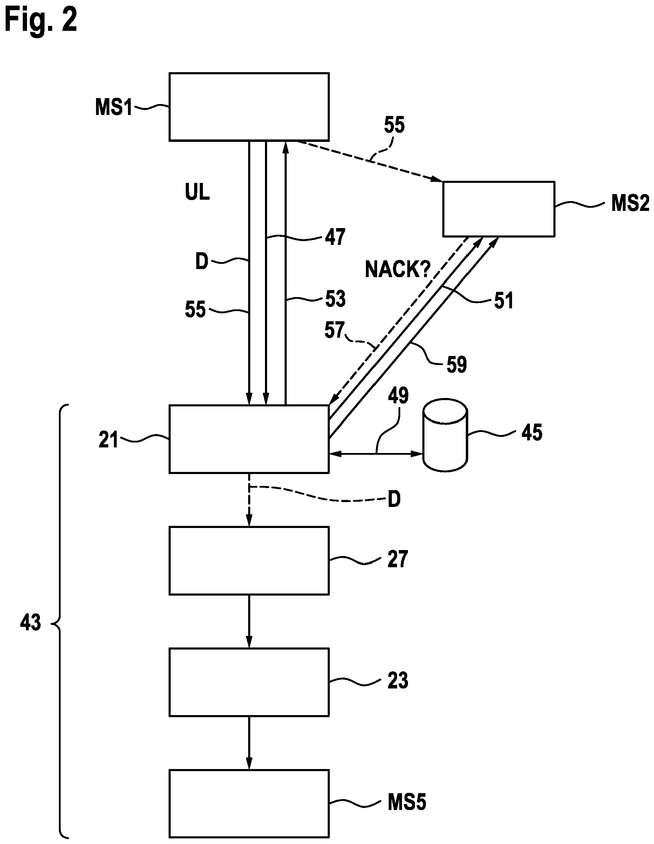

Referring to Figures 2 to 4, an embodiment of the invention will be explained in more detail by describing different communication scenarios. Figure 2 shows a rather simple scenario of the combination of device-to-device communication 41 and conventional cellular communication 43. In this scenario, the first terminal MS1 communicates with the terminal MS2 using device-to-device communication and with the terminal MS5 using cellular communication 43. First, the first terminal MS1 decides to share some content (i.e. a piece of data D) with the terminals MS2, MS5, i.e. the terminal MS1 wants to transmit the data D to these two terminals MS2, MS5. To this end, the terminal MS1 sends a request to the first base station 21 informing the first base station 21 that it wants to share the data D with multiple further terminals and indicates the set of addressees MS2, MS5 to the base station 21 (arrow 47).

The first base station 21 receives this request 47 from the first terminal MS1 identifies the set of further terminals MS2, MS5 to which the data D is addressed (e.g. a set of addressees) and queries (arrow 49) its location database in order to determine a sub-set of the addressees that possibly can receive the data D directly from the first terminal MS1 via the uplink transmission resources 17 (i.e. by device to device communication). In the shown embodiment, the first base station 12 assumes that at least those terminals located in the same radio cell 33 as the first terminal MS1 can possibly receive the data D directly from the first terminal MS 1. In the scenario shown in Figure 1, the sub-set of directly reachable addressees includes the terminal MS2 only.

After having determined the set of addressees that possibly can receive the data D directly from the first terminal MS1, the first base station 21 instructs these terminals to receive the data transmitted by the first terminal MS1 directly from the first terminal MS1 via the uplink transmission resources 17 (arrow 51). In the shown scenario, the first base station 21 instructs the terminal MS2 only because the sub-set includes terminal MS2 only. In addition, the base station 21 instructs the first terminal MS1 to transmit the data D over a portion of the uplink transmission resources 17 of the access network 13 (arrow 53).

The first terminal MS1 eventually transmits a piece of data D over the uplink transmission resources 17 which may be received by both the base station 21 and the further terminal MS2. If the terminal MS2 cannot decode the data D it sends a negative acknowledgement NACK to the base station 21 (arrow 57). If the base station 21 receives the negative acknowledgement NACK then the base station 21 retransmits the data D (arrow 59) so that the terminal MS2 can reconstruct the data D based on the retransmission 59 and/or the original data transmission 55. In the shown embodiment the hybrid automatic repeat request (HARQ) of LTE is used as an acknowledgement procedure for acknowledging the data transmissions 55. That is, in an embodiment, the second terminal MS2 may not only send negative acknowledgements but also positive acknowledgements ACK in case it has received the data successfully. Furthermore, Chase combining techniques or incremental redundancy techniques of LTE can be applied. In another embodiment, a rateless code such as a Fountain code, may be applied for encoding the data D in the retransmissions 59 and/or the initial data transmission 55. Fountain codes are described in detail in the scientific paper D.J.C. MacKay: "Fountain codes", IEEE Proceedings Communications, 2005, Vol. 152, No. 6, pages 1062 - 1068 and in the references cited therein.

In any embodiment, multiple retransmissions 59 may be performed until the second terminal MS2 (or each terminal in the sub-set of terminals that can possibly receive the data transmitted by the first terminal MS1 directly) has received the data. In an embodiment, the maximum number of retransmissions is limited to guarantee that the HARQ process related to the individual data units D to be transmitted eventually terminates.

As can be seen in Figure 2, the base station 21 uses conventional cellular communication 43 for conveying the data D to those terminals MS5 that are not considered to be directly reachable by the first terminal MS 1. In particular, the first base station 21 forwards the data over the core network 27 and the second base station 23 to the terminal MS5.

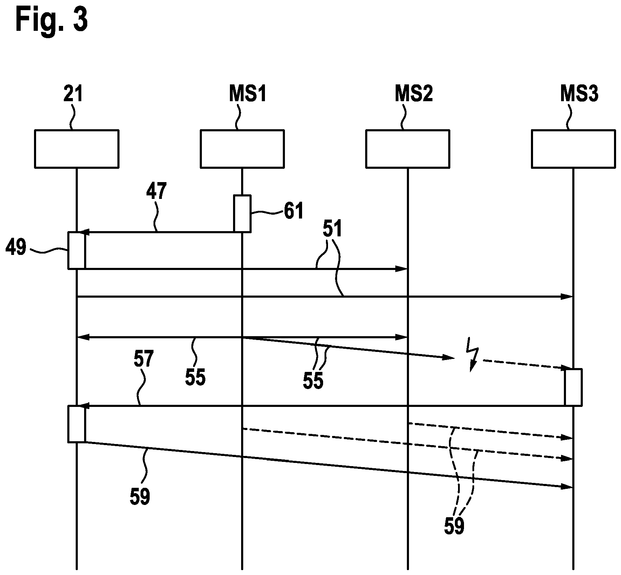

Figure 3 shows a more complex exemplary scenario where two addressees MS2, MS3 are located in the first cell 33. However, the distance between the first terminal MS1, which wants to transmit the data D to the other terminals MS2, MS3, is comparatively long so that the terminal MS3 cannot reliably decode data D received directly from the first terminal MS1. However, the terminal MS3 can reliably receive and decode transmissions from the first base station 21 over the downlink radio transmission resources 19. In this scenario, the first terminal MS1 decides in a step 61 to communicate the data D to the addressees MS2, MS3. As in the scenario shown in Figure 2, the first terminal MS1 sends the request 47 to the first base station 23 including an indication that the first terminal MS1 wants to transmit the data D to multiple addressees and the set of addressees MS2, MS3.

Then the first base station 21 identifies the set of addressees by analyzing the request 47 and determines the sub-set of addressees MS2 and MS3 that can potentially reached directly by the first terminal MS1 because they are located in the same cell 33 as the first terminal (step 49).

The first base station 21 then informs the addressees MS2, MS3 determined in step 49 to listen to uplink transmissions of the data D by the first terminal MS 1 (arrow 51). Instructing the addressees MS2 and MS3 may include indicating the specific piece of uplink transmission resources 17 to which the addressees MS2, MS3 shall listen for the data transmission by the first terminal MS1. In addition, the first base station 21 instructs the first terminal MS 1 to transmit the data D over uplink transmission resources 17 (arrow 53). Instructing 53 the first terminal may include indicating the piece of uplink radio transmission resources 17 to be used by the first terminal for the transmission of the data D to be shared with the addressees MS2, MS3. The first base station 21 indicates the same piece of uplink transmission resources 17 to both the first terminal MS1 as well as to the determined addressees MS2, MS3 so that the determined addressees MS2 and MS3 can successfully receive and decode the data transmission from the first terminal MS 1.

During the data transmission 55, the first base station 21 and the determined addressees MS2, MS3 listen on the piece of uplink transmission resources 17 specified by the first base station 21. The base station 21 and the terminal MS2 can successfully decode the data transmission 55. However, the terminal MS3 cannot successfully decode the data transmission and therefore transmits a negative acknowledgement 57 to the base station 21. Upon reception of the negative acknowledgement 57, the first base station 21 retransmits the data (arrow 59) the terminal MS3 receives the retransmission 59 and reconstructs the data based on the retransmission and on the initial data transmission 55. In case that the retransmission 59 does not result in a successful data transmission to the terminal MS3, the terminal MS3 would transmit a further negative acknowledgement 57 to the base station 21 which will perform an additional retransmission 59 (not shown). In a preferred embodiment, the first base station 21 may encode the data D in the retransmission in a different way than in the initial transmission either by using chase combining or by using incremental redundancy or by using a rateless code such as Fountain code. In the shown scenario, the terminal MS3 can successfully decode the data D after reception of the first retransmission 59 so that the terminal MS3 does not send an additional negative acknowledgement and the first base station 21 considers the data transmission to be completed successfully.

In another embodiment, the retransmission 59 is performed by one or more terminals MS1 and/or MS2 on the uplink radio resources 17 (see dashed arrows 59 in Figure 3). The retransmission may be performed by the terminals MS1, MS2 instead of the retransmission by the first base station 21 or in addition to the retransmission by the base station 21. In yet another embodiment, the retransmissions from the terminals MS 1 and/or MS2 are performed on further radio resources 63 that are separate from the uplink transmission resources 17 and the downlink transmission resources 19. The further radio resources 63 are dedicated to device-to-device communication; they are not part of the cellular uplink transmission resources 17 or cellular downlink transmission resources 19.

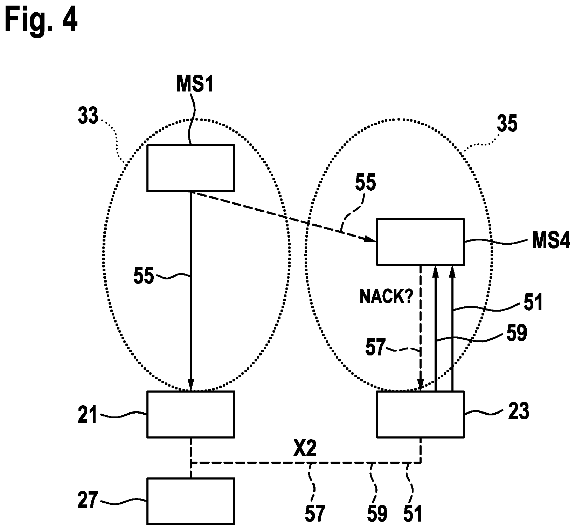

In the scenario shown in Figure 4, an additional addressee (terminal MS4) is involved in the communication. Terminal MS4 can possibly receive the data D directly from the first terminal MS1 over the uplink transmission resources 17. However, the terminal MS4 is located in a different cell 35 than the first terminal MS1. In order to allow direct device-to-device communication 41 from the first terminal MS1 to the terminal MS4, the first base station 21 may be arranged to determine that addressees that are located in a neighbouring cell 35 of the cell 33, where the first terminal MS1 is located, as addressees that possibly can receive the data D directly from the first terminal MS 1 via the uplink transmission resources 17. In order to check whether an addressee is located in a neighbouring cell 35, the first base station 21 may use handover measurement results of handover measurement performed by the first base station 21 or a neighbouring base station, such as the second base station 23. The base stations 21, 23 may transmit the handover measurement results to other base stations 23, 21 over the X2 interface. For example, if the first base station 21 and a particular neighbour base station such as the second base station 23 see that both the first terminal MS1 and the terminal MS4 located in the second cell 35 have sufficient signal quality from both cells 33,35, they may be determined to be an addressee that can possibly receive the data directly from the first terminal MS 1 by device-to-device communication.

If the first base station 21 has decided that the terminal MS4 can possibly receive the data D directly from the terminal MS1 via the uplink transmission resources 17 although the terminals MS1 and MS4 are located in different cells 33, 35, the first base station 21 instructs (arrow 51) the terminal MS4 to listen on uplink resources 17 specified by the first base station 21 for the data transmission by the first terminal MS1. The request 51 instructing the terminal MS4 to listen on uplink resources 17 may be transmitted by the first base station 21 e.g. over the X2 interface to the second base station 23, which forwards the request 51 to the terminal MS4. Basically, the base stations 21, 23 may use inter base station communication, e.g. over the X2 interface, for deciding on whether the terminal MS4 shall be instructed to listen on the uplink resources 17. In case of an unsuccessful transmission, the terminal MS4 requests a retransmission by sending a negative acknowledgment NACK to its base station, i.e. the second base station 23. The second base station 23 then requests the data D via the X2 interface from the first base station 21 and retransmits the data D to the terminal MS4 via downlink transmission resources 19. The acknowledgement procedure used in the scenario shown in Figure 4 is almost the same as in the scenario shown in Figures 2 and 3. However, the negative acknowledgement NACK and the retransmissions 59 are not performed directly between the terminal MS4 and the first base station 21 but indirectly over the second base station 23 using the X2 interface.

Using device-to-device communication 41 between terminals MS1, MS4 located in different cells - e.g. in neighbouring cells 33, 35 - is suitable in the following cases. First, device-to-device communication between the terminals MS1 and MS4 can be applied particularly successfully if the second cell 35 has relatively low load and its radio resources (time and frequency) where the device-to-device data transmission of the first terminal MS 1 are performed remain at least substantially unused and thus there are at most little interferences in the uplink 17 between the device to device communication from the first terminal MS1 to the terminal MS4 and uplink transmissions performed by other terminals registered with the second base station 23.

A second case, where device-to-device communication is particularly suitable is the case where the second base station 23 may ensure spatial separation of device-to-device communication traffic from the terminal MS1 to the terminal MS4 from other traffic in the second cell 35, e.g. traffic originating from other terminals registered with the second base station 23. Spatial separation can be achieved e.g. by scheduling at least some of those other terminals registered with the second base station 23 that are located comparatively far away from the terminal MS4 and/or by avoiding scheduling at least one other terminal that is located next to the terminal MS4. In order to determine whether a terminal is sufficiently far away from the terminal MS4 or next to the terminal MS4, knowledge on the geometrical location of a terminal may be used, e.g. a location determined by a positioning system (e.g. GPS), or a location estimated based on an angle of arrival (e.g. by using multiple antenna systems when receiving signals from the terminals by the second base station 23 and/or using handover measurement results.

In a third case in which device-to-device communication from the first terminal MS 1 to the terminal MS4 is suitable, the terminal MS4 may use advanced receiver techniques to deal with the interference coming from the terminals registered with the second cell 35. For example, if the terminal MS4 has multiple antennas, the terminal MS4 may use interference suppression techniques. Furthermore, the terminal MS4 may use interference cancellation or maximum likelihood receivers.

As described above, the retransmissions 59 can be performed in the downlink 19, with the base stations 21, 23, retransmitting the data D to the terminals that could not successfully receive the data. As decoding errors that lead to unsuccessful reception can happen to several terminals MS2, MS3, MS4, the retransmission can be a multicast. Furthermore, the retransmission can be performed in the uplink 17 or on the further dedicated device-to-device communication resources or a separate network dedicated to device-to-device communication. In this case, the retransmission is done by the first terminal MS 1 itself. The first terminal MS 1 either uses the regular cellular uplink resources 17 or the radio resources 63 dedicated for device-to-device communication.

In an embodiment, joint retransmissions may be performed, i.e. multiple terminals that have the data available (the first terminal MS1 and/or an addressee that has already received the data D successfully) may transmit in the uplink transmission resources 17 (or on dedicated device-to-device resources). The addressees that have not yet successfully received and decoded the data D may combine the retransmissions performed by multiple terminals MS1, MS2 in order to reconstruct the data D. Using joint retransmissions allows to extend the range of the retransmissions. The dashed arrows 59 in Figure 3 show an exemplary joint retransmission, where terminal MS1 and terminal MS2 simultaneously retransmit the data D to the terminal MS3. MS3 then receives the "over-the-air-combined" sum receive signal of MS1 and MS2.

The base station, in particular the first base station 21, decides on whether the retransmission shall be performed in the downlink by the base stations 21, 23 or whether the retransmission shall be performed in the uplink 17. In addition, the base station 21, 23 may decide on whether joint retransmissions shall be applied. This decision by the base station 21 may be based on network information about the state of the network and/or the topology of the access network 13. The network information may include information on whether uplink transmission resources 17 or downlink transmission resources 19 are more scarce compared to each other. For example, if the uplink transmission resources 17 are scarcer than the downlink transmission resources 19, free transmissions by the base stations 21, 23 may be applied. If the downlink transmission resources 19 are scarcer than the uplink transmission resources 17, then retransmissions by the terminals may be performed.

Furthermore, the network information may include a size of the cells 33, 35 and/or a location of the individual terminals MS1, MS2, MS3, MS4. The cell size and the location of the terminals may be used to estimate whether all addressees that are included in device-to-device communication can be reached by a retransmission by the terminals in the uplink 17. If this is probably not the case, retransmission via the base stations 21, 23 using the downlink resources 19 may be performed.

Moreover, the network information may include the interference situation in the uplink 17 and/or the downlink 19. For example, if it is more important for the overall efficiency of the network to prevent additional interference in the uplink 17 then the retransmission 59 should be performed on the downlink 19 by the base stations 21, 23. If it is more important to prevent the network from additional downlink interference then the retransmission should be performed by the terminals MS1, MS2, MS3, MS4 using the uplink transmission resources 17. In all embodiments, retransmissions can use a rateless code such as Fountain Code for encoding the re-transmitted data D.

To sum up, the embodiments described herein refer to network elements and methods that use a combination of conventional cellular communication 43 and device-to-device communication 41, where a single portion of uplink transmission resources 17, which portion is normally dedicated for cellular communication, is used for 43 for both cellular communications 43 as well as for device-to-device communication 41. This has the effect that the radio transmission resources are used efficiently in cases where the data D must be communicated both by device-to-device communication as well as by conventional cellular communication.

By instructing 51 the terminals to listen for the data transmission from the first terminal MS1, hence by using the acknowledgment procedure described herein, device-to-device communication 41 may be established without using direct beaconing between the terminals MS1, MS2, MS3, MS4 involved in device-to-device communication. As a consequence, signalling overhead for control of the terminals MS1, MS2, MS3, MS4 is reduced, which results in a reduced energy consumption so that the batteries of the terminals MS1, MS2, MS3, MS4 are discharged more slowly. In particular, avoiding transmitting beacon signals heavily reduces the energy consumption. Moreover, depending on the location of the terminals MS1, MS2, MS3, MS4 and depending on the radio resources allocated for the device-to-device communication, a delay for establishing the device-to-device communication can be reduced because a beaconing and channel estimation phase can be eliminated. By using a rateless code for the initial data transmission and/or the at least one retransmission, the efficiency of the device-to-device communication can be further improved.

## Claims

1. Access network element (15) for a cellular wireless access network (13), the access network (13) comprising uplink radio transmission resources (17) that are different to downlink radio transmission resources (19) of the access network (13), the network element (15) comprising means adapted for
- instructing (53) a first radio terminal (MS1) to transmit data (D) over a portion of the uplink transmission resources (17) to the access network (13); and means adapted for
- receiving (55) the data (D) from the first terminal (MS1) over the portion of the uplink transmission resources (17); and means adapted for
- instructing (51) at least one further radio terminal (MS2, MS3, MS4) to receive the data (D) transmitted by the first terminal (MS1) over the portion of the uplink transmission resources (17) directly via the uplink transmission resources (17); the access network element comprises means adapted for
- performing at least one acknowledgement process (57, 59) with the at least one further radio terminal (MS2, MS3, MS4), the acknowledgement process (57, 59) being related to the data (D) transmitted directly from the first radio terminal (MS1) to the further radio terminal (MS2, MS3, MS4) **characterised by**
the radio terminal (MS2, MS3, MS4) being operable for sending (57) a negative acknowledgement to a base station (21) if the terminal (MS2, MS3, MS4) cannot decode the data (D), the means adapted for performing the acknowledgement process comprise means adapted for retransmitting (59) the data directly to the further terminal (MS2, MS3, MS4) upon reception (57) of a negative acknowledgement (NACK) from the further terminal (MS2, MS3, MS4), the radio terminal (MS2, MS3, MS4) being further operable for reconstructing the data (D) based on the retransmission (59) from the base station (21) and on the original data transmission (55) .

2. Access network element (15) according to claim 1, wherein the means adapted for performing the acknowledgement process (57, 59) comprise means adapted for encoding the data (D) to be retransmitted by means of a rateless code, preferably a Fountain Code.

3. Access network element (15) according to one of the precedent claims wherein the network element (15) comprises means adapted for determining a set of the further terminals (MS2, MS3, MS4, MS5, 31) to which the data (D) is addressed and further adapted for determining a sub-set including those further terminals (MS2, MS3, MS4) that possibly can receive the data directly from the first terminal (MS1) via the uplink transmission resources (17), wherein the network element (15) comprises further means adapted for instructing (51) the further terminals contained in the addressee set to receive the data (D) over the uplink transmission resources (17) directly from the first terminal (MS1).

4. Access network element (15) according to one of the precedent claims, wherein the network element comprises means adapted for determining a location of at least on further terminal (MS2, MS3, MS4, MS5), preferably by querying (49) a location database (45).

5. Access network element (15) according to one of the precedent claims, wherein the network element (15) comprises means adapted for for including those further terminals (MS2, MS3) in the set that are located in the same cell (33) as the first terminal (MS1).

6. Access network element (15) according to one of the precedent claims, wherein the network element (15) comprises means adapted for including further terminals (MS4) into the set that are located in a neighbouring cell (35) with respect to the cell (33) with which the first terminal (MS1) is registered.

7. Method for operating an access network element (15) for a cellular wireless access network (13), the access network (13) comprising uplink transmission resources (17) that are different to downlink transmission resources (19) of the access network (13), the method comprising
- instructing (53) a first radio terminal (MS1) to transmit data (D) over a portion of the uplink transmission resources (17) to the access network (13); and
- receiving (55) the data (D) from the first terminal (MS1) over the portion of the uplink transmission resources (17); and
- instructing (51) at least one further radio terminal (MS2, MS3, MS4) to receive the data (D) transmitted by the first terminal (MS1) over the portion of the uplink transmission resources (17) directly via the uplink transmission resources (17); the method further comprises
- performing at least one acknowledgement process (57, 59) with the at least one further radio terminal (MS2, MS3, MS4), the acknowledgement process (57, 59) being related the data (D) transmitted directly from the first radio terminal (MS1) to the further radio terminal (MS2, MS3, MS4) **characterised by** the radio terminal (MS2, MS3, MS4) being operable for sending (57) a negative acknowledgement to a base station (21) if the terminal (MS2, MS3, MS4) cannot decode the data (D), wherein performing the acknowledgement process comprises retransmitting (59) the data directly to the further terminal (MS2, MS3, MS4) upon reception (57) of a negative acknowledgement (NACK) from the further terminal (MS2, MS3, MS4) the radio terminal (MS2, MS3, MS4) being further operable for reconstructing the data (D) based on the retransmission (59) from the base station (21) and on the original data transmission (55).

8. Radio access network (13) comprising an access network element (15) according to one of claims 1 to 7.

9. Radio terminal (MS2, MS3, MS4) for a cellular wireless access network (13), the access network comprising (13) uplink transmission resources (17) that are different to downlink transmission resources (19) of the access network (13), the radio terminal (MS2, MS3, MS4) comprises means adapted for
- receiving an instruction (53) to receive data (D) transmitted by another terminal (MS 1) over a portion of the uplink transmission resources (17) to the access network element (15); and further adapted for
- receiving, as an original data transmission (55), the data (D) over said portion of the uplink transmission resources (17) directly from the other terminal (MS2, MS3, MS4),
**characterized in that** the radio terminal (MS2, MS3, MS4) comprises means adapted for
- sending (57) a negative acknowledgement to a base station (21) if the terminal (MS2, MS3, MS4) cannot decode the data (D); and means adapted for
- reconstructing the data (D) based on a retransmission (59) from the base station (21) and on the original data transmission (55).

10. Radio terminal (MS2, MS3, MS4) according to claim 9, wherein the radio terminal (MS2, MS3, MS4) comprises multiple antennas and means adapted for cancelling interference in the portion of uplink transmission resources (17).

11. Method for operating a radio terminal the access network comprising (13) uplink transmission resources (17) that are different to downlink transmission resources (19) of the access network (13), the method comprising
- receiving an instruction (53) to receive data (D) transmitted by another terminal (MS 1) over a portion of the uplink transmission resources (17) to the access network element (15); and
- receiving (55) the data (D) over said portion of the uplink transmission resources (17) directly from the other terminal (MS2, MS3, MS4);
**characterized in that** the method further comprises
- sending (57) a negative acknowledgement to a base station (21) if the terminal (MS2, MS3, MS4) cannot decode the data (D); and
- reconstructing the data (D) based on a retransmission (59) from the base station (21) and on the original data transmission (55).

## Patentansprüche

1. Zugangsnetzwerkelement (15) für ein zellulares drahtloses Zugangsnetzwerk (13), wobei das Zugangsnetzwerk (13) Uplink-Funkübertragungsressourcen (17) umfasst, die sich von Downlink-Funkübertragungsressourcen (19) des Zugangsnetzwerks (13) unterscheiden, wobei das Netzwerkelement (15) Mittel umfasst, die ausgelegt sind für
- das Anweisen (53) eines ersten Funkendgeräts (MS1) zur Übertragung von Daten (D) über einen Abschnitt der Uplink-Übertragungsressourcen (17) an das Zugangsnetzwerk (13); und
Mittel, die ausgelegt sind für
- den Empfang (55) der Daten (D) von dem ersten Funkendgerät (MS1) über den Abschnitt der Uplink-Übertragungsressourcen (17); und
Mittel, die ausgelegt sind für
- das Anweisen (51) mindestens eines weiteren Funkendgeräts (MS2, MS3, MS4) zum Empfang der Daten (D), die vom ersten Funkendgerät (MS1) über den Abschnitt der Uplink-Übertragungsressourcen (17) direkt über die Uplink-Übertragungsressourcen (17) übermittelt werden;
wobei das Zugangsnetzwerkelement Mittel umfasst, die ausgelegt sind für
- das Ausführen mindestens eines Bestätigungsprozesses (57, 59) mit dem mindestens einen weiteren Funkendgerät (MS2, MS3, MS4), wobei der Bestätigungsprozess (57, 59) in Verbindung steht mit den direkt von dem ersten Funkendgerät (MS1) an das weitere Funkendgerät (MS2, MS3, MS4) übermittelten Daten (D),
**dadurch gekennzeichnet, dass** das Funkendgerät (MS2, MS3, MS4) betriebsbereit ist für das Senden (57) einer negativen Bestätigung an eine Basisstation (21), wenn das Funkendgerät (MS2, MS3, MS4) die Daten (D) nicht decodieren kann,
wobei die Mittel dafür ausgelegt sind, dass das Durchführen des Bestätigungsprozesses Mittel umfasst, die ausgelegt sind für das erneute Übermitteln (59) der Daten direkt an das weitere Funkendgerät (MS2, MS3, MS4) in Reaktion auf den Empfang (57) einer negativen Bestätigung (Negative Acknowledgement, NACK) von dem weiteren Funkendgerät (MS2, MS3, MS4), wobei das Funkendgerät (MS2, MS3, MS4) weiterhin ausgelegt ist für das Rekonstruieren der Daten (D) auf der Grundlage der Übertragungswiederholung (59) von der Basisstation (21) und der Originaldatenübertragung (55).

2. Zugangsnetzwerkelement (15) nach Anspruch 1, wobei die für das Ausführen des Bestätigungsprozesses (57, 59) ausgelegten Mittel Mittel umfassen, die ausgelegt sind für das Codieren der erneut zu übermittelnden Daten (D) anhand eines Rateless-Codes, vorzugsweise eines Fountain-Codes.

3. Zugangsnetzwerkelement (15) nach einem der vorgenannten Ansprüche, wobei das Netzwerkelement (15) Mittel umfasst, die ausgelegt sind für das Bestimmen eines Satzes weiterer Funkendgeräte (MS2, MS3, MS4, MS5, 31), an welche die Daten (D) gerichtet sind, und wobei das Netzwerkelement weiterhin ausgelegt ist für das Bestimmen eines Teilsatzes, der besagte weitere Funkendgeräte (MS2, MS3, MS4) umfasst, die möglicherweise die Daten über die Uplink-Übertragungsressourcen (17) direkt von dem ersten Funkendgerät (MS1) empfangen können, wobei das Netzwerkelement (15) weitere Mittel umfasst, die ausgelegt sind für das Anweisen (51) der weiteren in dem Adressatensatz enthaltenen Endgeräte, die Daten (D) über die Uplink-Übertragungsressourcen (17) direkt von dem ersten Funkendgerät (MS1) zu empfangen.

4. Zugangsnetzwerkelement (15) nach einem der vorgenannten Ansprüche, wobei das Netzwerkelement Mittel umfasst, die ausgelegt sind für das Bestimmen einer Position mindestens eines weiteren Funkendgeräts (MS2, MS3, MS4, MS5), vorzugsweise anhand einer Anfrage (49) an eine Positionsdatenbank (45).

5. Zugangsnetzwerkelement (15) nach einem der vorgenannten Ansprüche, wobei das Netzwerkelement (15) Mittel umfasst, die ausgelegt sind für das Einbeziehen dieser weiteren Funkendgeräte (MS2, MS3) in den Satz derjenigen Funkendgeräte, die in derselben Zelle (33) wie das erste Funkendgerät (MS1) positioniert sind.

6. Zugangsnetzwerkelement (15) nach einem der vorgenannten Ansprüche, wobei das Netzwerkelement (15) Mittel umfasst, die ausgelegt sind für das Einbeziehen weiterer Funkendgeräte (MS4) in den Satz derjenigen Funkendgeräte, die in einer benachbarten Zelle (35) zu der Zelle (33) positioniert sind, in der das erste Funkendgerät (MS1) positioniert ist.

7. Verfahren für den Betrieb eines Zugangsnetzwerkelements (15) für ein zellulares drahtloses Zugangsnetzwerk (13), wobei das Zugangsnetzwerk (13) Uplink-Übertragungsressourcen (17) umfasst, die sich von Downlink-Übertragungsressourcen (19) des Zugangsnetzwerks (13) unterscheiden, wobei das Verfahren umfasst:
- das Anweisen (53) eines ersten Funkendgeräts (MS1) zur Übertragung von Daten (D) über einen Abschnitt der Uplink-Übertragungsressourcen (17) an das Zugangsnetzwerk (13); und
- den Empfang (55) der Daten (D) von dem ersten Funkendgerät (MS1) über den Abschnitt der Uplink-Übertragungsressourcen (17); und
- das Anweisen (51) mindestens eines weiteren Funkendgeräts (MS2, MS3, MS4) zum Empfang der Daten (D), die vom ersten Funkendgerät (MS1) über den Abschnitt der Uplink-Übertragungsressourcen (17) direkt über die Uplink-Übertragungsressourcen (17) übermittelt werden;
wobei das Verfahren weiterhin umfasst:
- das Ausführen mindestens eines Bestätigungsprozesses (57, 59) mit dem mindestens einen weiteren Funkendgerät (MS2, MS3, MS4), wobei der Bestätigungsprozess (57, 59) in Verbindung steht mit den direkt von dem ersten Funkendgerät (MS1) an das weitere Funkendgerät (MS2, MS3, MS4) übermittelten Daten (D);
**dadurch gekennzeichnet, dass**
das Funkendgerät (MS2, MS3, MS4) betriebsbereit ist für das Senden (57) einer negativen Bestätigung an eine Basisstation (21), wenn das Funkendgerät (MS2, MS3, MS4) die Daten (D) nicht decodieren kann, wobei das Durchführen des Bestätigungsprozesses das erneute Übermitteln (59) der Daten direkt an das weitere Funkendgerät (MS2, MS3, MS4) in Reaktion auf den Empfang (57) einer negativen Bestätigung (Negative Acknowledgement, NACK) von dem weiteren Funkendgerät (MS2, MS3, MS4) umfasst, wobei das Funkendgerät (MS2, MS3, MS4) weiterhin ausgelegt ist für das Rekonstruieren der Daten (D) auf der Grundlage der Übertragungswiederholung (59) von der Basisstation (21) und der Originaldatenübertragung (55).

8. Funkzugangsnetzwerk (13) mit einem Zugangsnetzwerkelement (15) gemäß einem der Ansprüche 1 bis 7.

9. Funkendgerät (MS2, MS3, MS4) für ein zellulares drahtloses Zugangsnetzwerk (13), wobei das Zugangsnetzwerk (13) Uplink-Übertragungsressourcen (17) umfasst, die sich von Downlink-Übertragungsressourcen (19) des Zugangsnetzwerks (13) unterscheiden, wobei das Funkendgerät (MS2, MS3, MS4) Mittel umfasst, die ausgelegt sind für
- den Empfang einer Anweisung (53) zum Empfang von Daten (D), die von einem anderen Funkendgerät (MS1) über einen Abschnitt der Uplink-Übertragungsressourcen (17) an das Zugangsnetzwerkelement (15) übermittelt werden;
und die weiterhin ausgelegt sind für
- den Empfang der Daten (D) über besagten Abschnitt der Uplink-Übertragungsressourcen (17) als Originaldatenübertragung (55) direkt von dem anderen Funkendgerät (MS2, MS3, MS4),
**dadurch gekennzeichnet, dass** das Funkendgerät (MS2, MS3, MS4) Mittel umfasst, die ausgelegt sind für
- das Senden (57) einer negativen Bestätigung an eine Basisstation (21), wenn das Funkendgerät (MS2, MS3, MS4) die Daten (D) nicht decodieren kann; und weiterhin Mittel, die ausgelegt sind für
- das Rekonstruieren der Daten (D) auf der Grundlage einer Übertragungswiederholung (59) von der Basisstation (21) und einer Originaldatenübertragung (55).

10. Funkendgerät (MS2, MS3, MS4) nach Anspruch 9, wobei das Funkendgerät (MS2, MS3, MS4) mehrere Antennen und Mittel umfasst, die ausgelegt sind für das Ausschalten von Interferenzen in dem Abschnitt der Uplink-Übertragungsressourcen (17).

11. Verfahren für den Betrieb eines Funkendgeräts, wobei das Zugangsnetzwerk (13) Uplink-Übertragungsressourcen (17) umfasst, die sich von Downlink-Übertragungsressourcen (19) des Zugangsnetzwerks (13) unterscheiden, wobei das Verfahren umfasst:
- den Empfang einer Anweisung (53) zum Empfang von Daten (D), die von einem anderen Funkendgerät (MS1) über einen Abschnitt der Uplink-Übertragungsressourcen (17) an das Zugangsnetzwerkelement (15) übermittelt werden; und
- den Empfang (55) der Daten (D) über besagten Abschnitt der Uplink-Übertragungsressourcen (17) direkt von dem anderen Funkendgerät (MS2, MS3, MS4);
**dadurch gekennzeichnet, dass** das Verfahren weiterhin umfasst:
- das Senden (57) einer negativen Bestätigung an eine Basisstation (21), wenn das Funkendgerät (MS2, MS3, MS4) die Daten (D) nicht decodieren kann; und
- das Rekonstruieren der Daten (D) auf der Grundlage einer Übertragungswiederholung (59) von der Basisstation (21) und einer Originaldatenübertragung (55).

## Revendications

1. Élément de réseau d'accès (15) destiné à un réseau d'accès sans fil cellulaire (13), le réseau d'accès (13) comprenant des ressources de transmission radio sur liaison montante (17) qui diffèrent des ressources de transmission radio sur liaison descendante (19) du réseau d'accès (13), l'élément de réseau (15) comprenant des moyens adaptés pour
- donner l'instruction (53) à un premier terminal radio (MS1) de transmettre des données (D) sur une partie des ressources de transmission sur liaison montante (17) vers le réseau d'accès (13) ; et
des moyens adaptés pour
- recevoir (55) les données (D) en provenance du premier terminal (MS1) sur la partie des ressources de transmission sur liaison montante (17) ; et
des moyens adaptés pour
- donner l'instruction (51) à au moins un autre terminal radio (MS2, MS3, MS4) de recevoir les données (D) transmises par le premier terminal (MS1) sur la partie des ressources de transmission sur liaison montante (17) directement via les ressources de transmission sur liaison montante (17) ;
l'élément de réseau d'accès comprenant des moyens adaptés pour
- réaliser au moins un processus d'acquittement (57, 59) avec le ou les autres terminaux radio (MS2, MS3, MS4), le processus d'acquittement (57, 59) étant relatif aux données (D) transmises directement du premier terminal radio (MS1) vers l'autre terminal radio (MS2, MS3, MS4), **caractérisé en ce que**
le terminal radio (MS2, MS3, MS4) permet d'envoyer (57) un accusé de réception négatif à une station de base (21) si le terminal (MS2, MS3, MS4) ne peut pas décoder les données (D), les moyens adaptés pour réaliser le processus d'acquittement comprenant des moyens adaptés pour retransmettre (59) les données directement à l'autre terminal (MS2, MS3, MS4) dès réception (57) d'un accusé de réception négatif (NACK) en provenance de l'autre terminal (MS2, MS3, MS4), le terminal radio (MS2, MS3, MS4) permettant en outre de reconstituer les données (D) sur la base de la retransmission (59) depuis la station de base (21) et de la transmission de données initiale (55).

2. Élément de réseau d'accès (15) selon la revendication 1, dans lequel les moyens adaptés pour réaliser le processus d'acquittement (57, 59) comprennent des moyens adaptés pour coder les données (D) à retransmettre à l'aide d'un code sans rendement, de préférence un code fontaine.

3. Élément de réseau d'accès (15) selon l'une des revendications précédentes, dans lequel l'élément de réseau (15) comprend des moyens adaptés pour déterminer un ensemble des autres terminaux (MS2, MS3, MS4, MS5, 31) destinataires des données (D) et adaptés en outre pour déterminer un sous-ensemble incluant ces autres terminaux (MS2, MS3, MS4) qui peuvent éventuellement recevoir les données directement depuis le premier terminal (MS1) via les ressources de transmission sur liaison montante (17), l'élément de réseau (15) comprenant en outre des moyens adaptés pour donner l'instruction (51) aux autres terminaux contenus dans l'ensemble des destinataires de recevoir les données (D) sur les ressources de transmission sur liaison montante (17) directement depuis le premier terminal (MS1).

4. Élément de réseau d'accès (15) selon l'une des revendications précédentes, dans lequel l'élément de réseau comprend des moyens adaptés pour déterminer la localisation d'au moins un autre terminal (MS2, MS3, MS4, MS5), de préférence en interrogeant (49) une base de données de localisation (45).

5. Élément de réseau d'accès (15) selon l'une des revendications précédentes, dans lequel l'élément de réseau (15) comprend des moyens adaptés pour inclure ces autres terminaux (MS2, MS3) dans l'ensemble de terminaux situés dans la même cellule (33) que le premier terminal (MS1).

6. Élément de réseau d'accès (15) selon l'une des revendications précédentes, dans lequel l'élément de réseau (15) comprend des moyens adaptés pour inclure d'autres terminaux (MS4) dans l'ensemble de terminaux situés dans une cellule avoisinante (35) de la cellule (33) sur laquelle le premier terminal (MS1) est enregistré.

7. Procédé d'exploitation d'un élément de réseau d'accès (15) destiné à un réseau d'accès sans fil cellulaire (13), le réseau d'accès (13) comprenant des ressources de transmission sur liaison montante (17) qui diffèrent des ressources de transmission sur liaison descendante (19) du réseau d'accès (13), le procédé comprenant les étapes suivantes :
- donner l'instruction (53) à un premier terminal radio (MS1) de transmettre des données (D) sur une partie des ressources de transmission sur liaison montante (17) vers le réseau d'accès (13) ; et
- recevoir (55) les données (D) en provenance du premier terminal (MS1) sur la partie des ressources de transmission sur liaison montante (17) ; et
- donner l'instruction (51) à au moins un autre terminal radio (MS2, MS3, MS4) de recevoir les données (D) transmises par le premier terminal (MS1) sur la partie des ressources de transmission sur liaison montante (17) directement via les ressources de transmission sur liaison montante (17) ;
le procédé comprenant en outre l'étape suivante :
- réaliser au moins un processus d'acquittement (57, 59) avec le ou les autres terminaux radio (MS2, MS3, MS4), le processus d'acquittement (57, 59) étant relatif aux données (D) transmises directement du premier terminal radio (MS1) vers l'autre terminal radio (MS2, MS3, MS4), **caractérisé en ce que**
le terminal radio (MS2, MS3, MS4) permet d'envoyer (57) un accusé de réception négatif à une station de base (21) si le terminal (MS2, MS3, MS4) ne peut pas décoder les données (D), la réalisation du processus d'acquittement comprenant la retransmission (59) des données directement à l'autre terminal (MS2, MS3, MS4) dès réception (57) d'un accusé de réception négatif (NACK) en provenance de l'autre terminal (MS2, MS3, MS4), le terminal radio (MS2, MS3, MS4) permettant en outre de reconstituer les données (D) sur la base de la retransmission (59) à partir de la station de base (21) et de la transmission de données initiale (55).

8. Réseau d'accès radio (13) comprenant un élément de réseau d'accès (15) selon l'une des revendications 1 à 7.

9. Terminal radio (MS2, MS3, MS4) destiné à un réseau d'accès sans fil cellulaire (13), le réseau d'accès (13) comprenant des ressources de transmission sur liaison montante (17) qui diffèrent des ressources de transmission sur liaison descendante (19) du réseau d'accès (13), le terminal radio (MS2, MS3, MS4) comprenant des moyens adaptés pour
- recevoir une instruction (53) de recevoir des données (D) transmises par un autre terminal (MS1) sur une partie des ressources de transmission sur liaison montante (17) vers l'élément de réseau d'accès (15) ; et
adapté en outre pour
- recevoir, en tant que transmission de données initiale (55), les données (D) sur ladite partie des ressources de transmission sur liaison montante (17) directement depuis l'autre terminal (MS2, MS3, MS4),
**caractérisé en ce que** le terminal radio (MS2, MS3, MS4) comprend des moyens adaptés pour
- envoyer (57) un accusé de réception négatif à une station de base (21) si le terminal (MS2, MS3, MS4) ne peut pas décoder les données (D) ; et des moyens adaptés pour
- reconstituer les données (D) sur la base d'une retransmission (59) depuis la station de base (21) et de la transmission de données initiale (55).

10. Terminal radio (MS2, MS3, MS4) selon la revendication 9, dans lequel le terminal radio (MS2, MS3, MS4) comprend des antennes multiples et des moyens adaptés pour annuler les interférences dans la partie des ressources de transmission sur liaison montante (17).

11. Procédé d'exploitation d'un terminal radio, le réseau d'accès cellulaire comprenant (13) des ressources de transmission sur liaison montante (17) qui diffèrent des ressources de transmission sur liaison descendante (19) du réseau d'accès (13), le procédé comprenant les étapes suivantes :
- recevoir une instruction (53) de recevoir des données (D) transmises par un autre terminal (MS1) sur une partie des ressources de transmission sur liaison montante (17) vers l'élément de réseau d'accès (15) ; et
- recevoir (55) les données (D) sur ladite partie des ressources de transmission sur liaison montante (17) directement depuis l'autre terminal (MS2, MS3, MS4) ;
**caractérisé en ce que** le procédé comprend en outre les étapes suivantes :
- envoyer (57) un accusé de réception négatif à une station de base (21) si le terminal (MS2, MS3, MS4) ne peut pas décoder les données (D) ; et
- reconstituer les données (D) sur la base d'une retransmission (59) depuis la station de base (21) et de la transmission de données initiale (55).
